# EUROPÄISCHE PATENTSCHRIFT

(11) **EP 0 669 199 B1**
(45) Veröffentlichungstag und Bekanntmachung des Hinweises auf die Patenterteilung: **09.06.1999**
(21) Anmeldenummer: 95101808.4
(22) Anmeldetag: 10.02.1995
(51) Int. Cl.: B29C 51/44

(54) **Anlage zur Herstellung und Fertigbearbeitung von Kunststoffformteilen**
Plant for manufacturing and finishing of plastic articles
Installation pour la fabrication et la finition d'objets moulés en matière plastique

(30) Priorität: 24.02.1994 DE 4406057
(43) Veröffentlichungstag der Anmeldung: 30.08.1995
(73) Patentinhaber: Georg Geiss Maschinenfabrik, 96145 Sesslach (DE)
(72) Erfinder: Geiss, Dipl.-Ing. Manfred, D-96145 Sesslach (DE)
(74) Vertreter: Weise, Reinhard, Dipl.-Ing.

(56) Entgegenhaltungen:
- EP-A- 0 325 036
- GB-A- 1 015 767
- US-A- 5 169 569
- MODERN PLASTICS INTERNATIONAL, Bd. 12,Nr. 2, 1982 LAUSANNE (CH), Seiten 32-34, SMOLUK GEORGE 'Better ways to trim take speed limits of thermoforming'

## Beschreibung

Die Erfindung bezieht sich auf eine Anlage zur Herstellung von Kunststoff-Formteilen in einer Vakuumformmaschine und zur Fertigbearbeitung der Formteile durch eine Fräsmaschine.

Vakuumformmaschinen sind seit langer Zeit bekannt und haben sich bewahrt. Diese Maschinen formen aus einem Halbzeug - einer thermoplastischen Platte oder Folie - mit Hilfe des Luftdrucks ein Formteil. Bei der Vakuumverformung ist es allerdings typisch, daß dieser Umformprozeß praktisch nie ein fertiges Produkt ergibt, wie dies beispielsweise beim Spritzguß der Fall ist. Das in der Vakuumformmaschine hergestellte Formteil tragt in aller Regel noch einen Spannrand, weiterhin müssen Bohrungen, Schlitze, Ausbrüche, Taschen usw. in das Formteil eingebracht werden. Zur Durchführung dieser Nachbearbeitungsvorgänge und zur Fertigbearbeitung der Vakuumformteile ist es bekannt, hierfür eine Fräsmaschine, insbesondere auch CNC-Fräsmaschinen, einzusetzen, deren Fräswerkzeug in beliebigen räumlichen Kurven und nach allen Koordinatenrichtungen bewegt werden kann, so daß die Vakuumformteile aus ihrem Spannrand herausgetrennt und sämtliche erforderlichen Nachbearbeitungen bis zur Fertigbearbeitung durchgeführt werden können. Vakuumformmaschine und Fräsmaschine sind dabei voneinander räumlich getrennt; die in der Vakuumformmaschine hergestellten Formteile müssen zunächst zwischengelagert werden, bevor sie der Fräsmaschine zugeführt werden können. Der Hauptgrund hierfür liegt in den verschiedenen Taktzeiten von Vakuumformmaschinen und CNC-Fräsmaschinen. Diese Taktzeiten können äußerst unterschiedlich sein. Es sind sowohl Formteile denkbar, bei denen die Vakuumverformung ein Mehrfaches der Fräszeit beträgt, als es auch andererseits möglich ist, daß die Fräszeit ein Mehrfaches der Verformungszeit ausmacht. Weiterhin ist zu bedenken, daß Vakuumformteile schrumpfen. Teile, die im warmen Zustand der Vakuumformmaschine entnommen werden, schrumpfen beim Abkühlen nochmals um etwa 0,5 % nach. Außerdem sind erkaltete Thermoplasten besser bearbeitbar als warme Materialien, da diese weicher sind. Auch dürfen Vakuumformmaschinen mit Staub und Spänen nicht in Berührung kommen, wie sie bei der Fräsbearbeitung zwangsläufig anfallen. Tatsache aber ist, daß die Verformung und erforderliche Nachbearbeitung in räum lich getrennten Maschinen mit Zwischenlagerung der Formteile bei unterschiedlichen Arbeitszyklen der Maschinen nicht nur zeitaufwendig ist, sondern auch einer Automatisierung des gesamten Ver- und Bearbeitungsverlaufs entgegensteht.

In der EP-A-0 325 036 ist eine Vorrichtung zur Herstellung von Kunststoff-Formteilen in einer Vakuumformmaschine und zur Fertigbearbeitung der Formteile durch eine Beschneidvorrichtung offenbart, wobei die Vakuumformmaschine unmittelbar mit der Beschneidevorrichtung gekoppelt ist und beide Maschinen in ihrer dem jeweiligen Formteil angepaßten Taktzeit mit dem Ziel voneinander abgestimmt sind, die Taktzeit der Vorrichtung zu erhöhen.

Aus der Zeitschrift "Modern Plastic International", Bd. 12, Nr. 2, 1982, S. 32-35 ist die Verwendung einer CNC-Fräsmaschine als Nachbearbeitungsvorrichtung im Anschluß an eine Kunststoff-Umformmaschine bekannt.

Mit der Erfindung soll die eingangs genannte Anlage in einer Form verfügbar gemacht werden, daß ein kontinuierlicher und einer Automatisierung zugänglicher Arbeitsablauf mit kompakter Anlagenausbildung ohne zusätzlicher Nachbearbeitung des Produktes ermöglicht wird.

Diese Aufgabe wird durch die im Anspruch 1 genannten Merkmale gelöst. Bevorzugte weitere Ausgestaltungen der Erfindung sind den nachgeordneten Patentansprüchen zu entnehmen.

Die Anlage der eingangs beschriebenen Art besteht also im wesentlichen aus einer Vakuumformmaschine und einer mit ihr zu einer Einheit verbundenen Fertigbearbeitungsmaschine, beispielsweise einer CNC-Fräsmaschine. Dabei sind beide Maschinen in ihrer dem jeweiligen Formteil angepaßten und von ihm vorgegebenen Taktzeit aufeinander abstimmbar, so daß ein Zwischenstapeln der zunächst der Vakuumformmaschine entnommenen Formteile entfällt und ein geschlossener Arbeitszyklus erhalten wird. Der Vakuumformmaschine ist weiterhin in Einheit eine Beschickungsvorrichtung zum Einbringen der Kunststoffplatten bzw. -folien zugeordnet, die mit einem Entnahmewagen zum Entnehmen der Formteile aus der Vakuumformmaschine ausgerüstet ist. Dieser Entnahmewagen ist gleichzeitig der Maschinentisch der mit der Vakuumformmaschine gekoppelten Fräsmaschine, wobei die Fräsmaschine über der Beschickungsvorrichtung angeordnet ist. Der Entnahmewagen in seiner Ausbildung als Maschinentisch der Fräsmaschine trägt eine Fräsaufnahme für das der Vakuumformmaschine entnommene Formteil, die als Stützform ausgebildet ist und das Formteil während der Fräsbearbeitung stützt und spannt. Die Fräsmaschine weist neben dem eigentlichen, räumlich beliebig verfahr- und verlagerbaren Fräswerkzeug ein zusätzliches verfahrbares Werkzeug auf, mit dem das Formteil an den Entnahmewagen bzw. die Fräsaufnahme gedrückt und gehalten und mit dem das fertige Formteil aufgenommen und von der Fräsaufnahme abgehoben wird, um es einer des weiteren vorgesehenen Stapelvorrichtung zuzuführen, die der Fräsmaschine nachgeordnet ist. Nach einem weiteren Merkmal der Erfindung ist die Vakuumformmaschine zum Plastifizieren der Kunststoffplatten mit einer steuerbaren Strahlerheizung und/oder die Fräsmaschine mit einem Hochgeschwindigkeits-Fräsaggregat ausgerüstet. Durch das Strahlersystem, das praktisch trägheitslos arbeitet, ist es möglich, die Vakuumformmaschine in ihrer Taktzeit erheblich zu beschleunigen, so daß Umformvorgänge, bei denen die Vakuumverformung bisher erheblich länger gedauert hat als die Fräsbearbeitung, wesentlich besser angepaßt werden können. Im umgekehrten Fall, bei dem die Fräsbearbeitung erheblich länger dauerte als die Vakuumverformung, kann diese Fräsbearbeitung mittels der Hochgeschwindigkeits-Aggregate erheblich kürzer gehalten werden und in etwa die beim Stanzverfahren benötigte kurze Zeit erreichen. Außerdem ist es mit den verwendeten Strahlersystemen möglich, die Vakuumformmaschine ohne jegliche Energiekosten für eine gewisse Zeit pro Zyklus stillzusetzen. Das Strahlersystem benötigt keine Aufheizzeiten und muß auch nicht in einer sogenannten Ruheposition warmgehalten werden, weil es praktisch trägheitslos arbeitet. Schließlich ist vorgesehen, die Fräsmaschine zu kapseln, so daß die beim Fräsen entstehenden Späne und Staubpartikel von der Vakuumformmaschine ferngehalten werden. Das Problem der Zerspanbarkeit warmer Thermoplaste kann durch intelligente Geometrie der Fräswerkzeuge kompensiert werden. Insgesamt wird also eine kompakte Anlage geschaffen, mit der eine Herstellung und Nachbearbeitung der Kunststoff-Formteile im vollautomatischen Betrieb erreicht wird, so daß die Gesamtzykluszeit verkürzt und die Kosten für die Herstellung der Formteile weiter verringert werden.

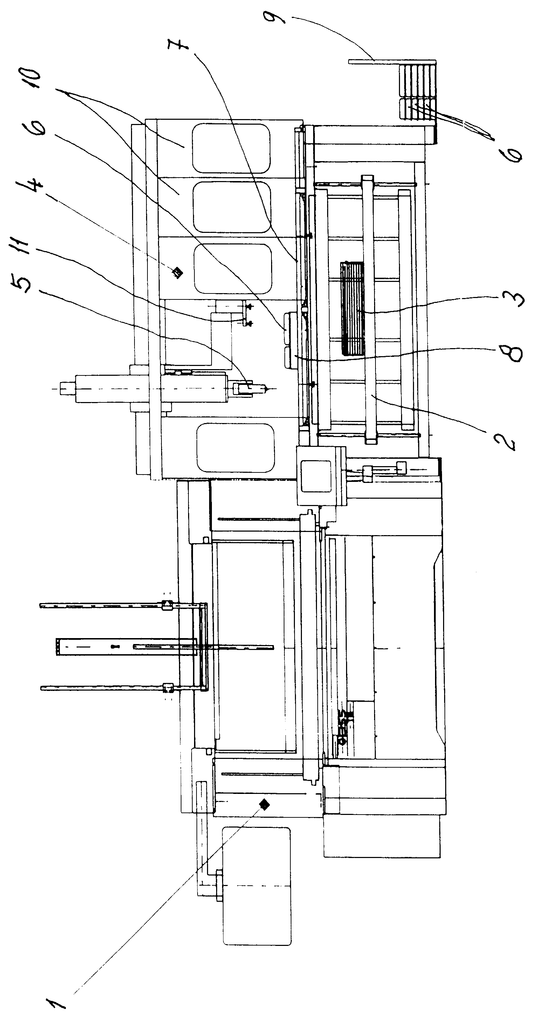

Die Erfindung wird nun anhand eines Ausführungsbeispiels im Zusammenhang mit der Zeichnung, die als einzige Figur eine aus Vakuumformmaschine, Fräsmaschine und Beschickungsvorrichtung bestehende Anlage zeigt, näher erläutert.

Die in der Zeichnung dargestellte Anlage besteht im wesentlichen aus einer Vakuumformmaschine 1 bekannter Bauart mit nicht weiter bezeichneten Spannrahmen, Stempeln usw. Der Vakuumformmaschine 1 ist eine Beschickungsvorrichtung 2 zugeordnet, mit deren Hilfe die einzelnen zu verformenden Kunststoffplatten bzw. -folien des Plattenstapels 3 der Vakuumformmaschine 1 zugeführt werden. Über der Beschickungsvorrichtung 2 ist eine Fräsmaschine 4 angeordnet, die als CNC-Fräsmaschine ausgebildet ist und ein räumlich beliebig verfahr- und verlagerbares Fräsaggregat 5 besitzt. Dieses Fräsaggregat 5 ist als Hochgeschwindigkeits-Aggregat ausgebildet und in der Lage, in kürzester Zeit die im einzelnen erforderliche Nachbearbeitung beim der Vakuumformmaschine 1 entnommenen Formteil 6 durchzuführen. Zum Entnehmen des Formteils 6 aus der Vakuumformmaschine 1 ist die Beschickungsvorrichtung 2 mit einem Entnahmewagen 7 ausgestattet, der nach dem Verformungsvorgang in die Vakuummaschine 1 einfährt, das Formteil 6 aufnimmt und wieder aus der Vakuummaschine 1 herausfährt. Dieser Entnahmewagen 7 bildet gleichzeitig den Maschinentisch für die darüber angeordnete Fräsmaschine 4. Der Entnahmewagen bzw. Maschinentisch 7 trägt eine Fräsaufnahme 8, die als Stutzform ausgebildet ist und das Formteil 6 während der Fräsbearbeitung durch das Fräsaggregat 5 spannt. Die Fräsmaschine 4 weist ein weiteres Werkzeug 11 auf, das verfahrbar ist und zum einen das dem Wagen 7 übergebene Formteil 6 andrückt und sicher hält und andererseits nach der Fräsbearbeitung des Formteils 6 dieses aufnimmt und auf einer der Fräsmaschine 4 bzw. Beschickungsvorrichtung 2 nachgeordneten Stapeleinrichtung 9 ablegt. Die Fräsmaschine ist im übrigen mittels entsprechender Abschirmwände 10 gekapselt, so daß die beim Fräsen entstehenden Späne und Staubpartikel nicht nach außen dringen können, die durch entsprechende Entnahmesysteme aus der Fräsmaschine 4 entfernt werden. Vakuumformmaschine 1, Fräsmaschine 4 und Beschickungsvorrichtung 2 mit Entnahmewagen 7 sind also miteinander zu einer Einheit verbunden und miteinander gekoppelt, so daß eine kompakte Anlage gebildet ist.

Während eines Arbeitszyklus fährt die Beschickungsvorrichtung 2 die zur Verformung benötigte Kunststoffplatte bzw. benötigten Platten in die Vakuumformmaschine 1 und entnimmt mittels des Entnahmewagens 7 das zuvor in der Vakuumformmaschine 1 geformte Formteil 6. Das Formteil 6 wird auf der Fräsaufnahme 8 des Entnahmewagens 7, der gleichzeitig den Maschinentisch der Fräsmaschine 4 bildet, gehalten und in der Fräsmaschine 4 fertigbearbeitet. Sodann wird das fertig bearbeitete Formteil 6 auf der Stapeleinrichtung 9 abgelegt und der Zyklus beginnt von vorne. Die Taktzeiten der Vakuumformmaschine 1 und der Fräsmaschine 4 werden hierbei so aufeinander abgestimmt, daß ein kontinuierliches Arbeiten möglich ist. Dies kann zum einen durch entsprechende Steuerung der Strahlerheizung der Vakuumformmaschine 1 - ggf. auch kurzzeitigem Stillsetzen derselben zur Vergrößerung der Taktzeit - zum anderen durch entsprechend schnelle Fräsbearbeitung der Formteile durch Hochgeschwindigkeits-Aggregate erreicht werden. Die Taktzeiten der beiden Maschinen 1 und 4 werden also einander angeglichen. Auf diese Weise ist ein Zwischenstapeln der der Vakuumformmaschine 1 entnommenen Formteile 6 vermieden und ein vollautomatisches Arbeiten der Anlage möglich. Durch die Doppelfunktion des Wagens 7 der Beschickungsvorrichtung 2 als Entnahmewagen und als Maschinentisch für die Fräsmaschine 4 wird die Anlage im Aufbau vereinfacht und kostengünstiger, wobei diese Doppelfunktion die Kompaktheit der Anlage weiter begünstigt. Durch die Anordnung der Fräsmaschine 4 über der Beschickungsvorrichtung 2 werden auch die Längenabmessungen der Anlage entsprechend klein gehalten, so daß Platz gespart wird.

## Patentansprüche

1. Anlage zur Herstellung und Fertigbearbeitung von Kunststoff-Formteilen (6), mit einer Vakuumformmaschine (1), die unmittelbar mit einer Fräsmaschine (4), insbesondere mit einem Hochgeschwindigkeits-Fräsaggregat, gekoppelt ist, wobei beide Maschinen (1, 4) in ihrer dem jeweiligen Formteil (6) angepaßten Taktzeit aufeinander abstimmbar sind, und wobei der Vakuumformmaschine (1) eine Beschickungsvorrichtung (2) zum Einbringen der Kunststoffplatten-Zuschnitte in die Vakuumformmaschine (1) mit einem Entnahmewagen (7) zum Entnehmen der Formteile (6) aus der Vakuumformmaschine (1) zugeordnet ist, wobei der Entnahmewagen (7) gleichzeitig den Maschinentisch der Fertigbearbeitungsmaschine (4) bildet, die über der Beschickungsvorrichtung (2) angeordnet ist.

2. Anlage nach Anspruch 1, dadurch gekennzeichnet, daß der Entnahmewagen (7) eine Aufnahme (8) für das der Va-kuumformmaschine (1) entnommene Formteil (6) trägt, die als Stützform ausgebildet ist und das Formteil (6) während der Bearbeitung stützt und spannt.

3. Anlage nach Anspruch 1 oder 2, dadurch gekennzeichnet, daß die Fertigbearbeitungsmaschine (4) ein verfahrbares Werkzeug (11) zum Andrücken des Formteils (6) an den Entnahmewagen (7) bzw. die Aufnahme (8) und zum Aufnehmen des fertig bearbeiteten Formteils (6) aufweist.

4. Anlage nach einem der Ansprüche 1 bis 3, dadurch gekennzeichnet, daß die Fertigbearbeitungsmaschine (4) eine Stapeleinrichtung (9) für die fertig bearbeiteten Formteile (6) nachgeordnet ist.

5. Anlage nach einem der Ansprüche 1 bis 4, dadurch gekennzeichnet, daß die Vakuumformmaschine (1) zum Plastifizieren der Kunststoffplatten mit einer steuerbaren Strahlerheizung und/oder die Fertigbearbeitungsmaschine (4) mit Hochgeschwindigkeits-Aggregaten (5) ausgerüstet ist.

6. Anlage nach einem der Ansprüche 1 bis 5, dadurch gekennzeichnet, daß die Fertigbearbeitungsmaschine (4) gekapselt (Wände 10) ist.

## Claims

1. System for manufacturing and finishing moulded plastic parts (6), comprising a vacuum moulding machine (1) coupled directly to a milling machine (4), in particular a high-speed milling unit, with both machines (1, 4) being adapted to be matched with each other in terms of their cycle times adapted to the respective moulded part (6), wherein a feeding device (2) is associated with the vacuum moulding machine (1) for feeding the plastic board blanks into the vacuum moulding machine (1) with a discharging carriage (7) for removing the moulded parts (6) from the vacuum moulding machine (1), with said discharging carriage (7) constituting at the same time the supporting table of said finishing machine (4) which is disposed above said feeding device (2).

2. System according to Claim 1, characterised in that said discharging carriage (7) carries a mount (8) for receiving the moulded part (6) removed from said vacuum moulding machine (1), which mount is configured as moulded support and supports and mounts the moulded part (6) during the machining operation.

3. System according to Claim 1 or 2, characterised in that said finishing machine (4) comprises a mobile tool (11) for pressing the moulded part (6) against said discharging carriage (7) or said mount (8), respectively, and for receiving the finished moulded part (6).

4. System according to any of the Claims 1 to 3, characterised in that a stacking means (9) for stacking the finished moulded parts (6) is disposed on the output side of said finishing machine (4).

5. System according to any of the Claims 1 to 4, characterised in that said vacuum moulding machine (1) is equipped for plastifying said plastic boards by means of a controllable radiator heating and/or that said finishing machine (4) is equipped with high-speed units (5).

6. System according to any of the Claims 1 to 5, characterised in that said finishing machine (4) is enclosed (walls 10).

## Revendications

1. Installation pour la fabrication et la finition de pièces moulées en matière plastique (6), comportant une machine à mouler sous vide (1) qui est directement accouplée à une machine à fraiser (4), en particulier à un groupe de fraisage à grande vitesse, les deux machines (1, 4) pouvant être accordées l'une à l'autre dans leur cadence adaptée à chaque pièce moulée (6), et à la machine à mouler sous vide (1) étant associé un dispositif de chargement (2) pour l'introduction des flans de plaques de matière plastique dans la machine à mouler sous vide (1) avec un chariot de prélèvement (7) pour le prélèvement des pièces moulées (6) de la machine à mouler sous vide (1), le chariot de prélèvement (7) constituant en même temps la table de la machine de finition (4), cette machine étant disposée au-dessus du dispositif de chargement (2).

2. Installation selon la revendication 1, caractérisée en ce que le chariot de prélèvement (7) forme un logement (8) pour la pièce moulée (6) prélevée de la machine à mouler sous vide (1), qui est conformé en moule de soutien et qui soutient et serre la pièce moulée (6) pendant l'usinage.

3. Installation selon la revendication 1 ou 2, caractérisée en ce que la machine de finition (4) comporte un outil (11) déplaçable pour presser la pièce moulée (6) sur le chariot de prélèvement (7) ou le logement (8) et pour reprendre la pièce moulée (6) usinée finie.

4. Installation selon l'une des revendications 1 à 3, caractérisée en ce qu'en aval de la machine de finition (4) est monté un dispositif d'empilage (9) pour les pièces moulées (6) usinées finies.

5. Installation selon l'une des revendications 1 à 4, caractérisée en ce que la machine à mouler sous vide (1) est équipée, pour la plastification des plaques en matière plastique, d'un chauffage radiant commandable et/ou la machine de finition (4) est équipée de groupes à grande vitesse (5).

6. Installation selon l'une des revendications 1 à 5, caractérisée en ce que la machine de finition (4) est capotée (parois 10).
